Europäisches Patentamt

(19) European Patent Office

Office européen des brevets

(11) Publication number : **0 444 941 A1**

# (12) EUROPEAN PATENT APPLICATION

(21) Application number : 91301678.8

(22) Date of filing : 28.02.91

(51) Int. Cl.⁵ : **F04C 15/00, F16D 1/06**

(30) Priority : 28.02.90 GB 9004594

(43) Date of publication of application :
04.09.91 Bulletin 91/36

(84) Designated Contracting States :
DE ES IT SE

(71) Applicant : APV CREPACO PUMPS LIMITED
Fort Road
Eastbourne, BN22 7SE (GB)

(72) Inventor : Barton, John Andrew
27 Heron Ridge
Polegate, BN26 5BJ, East Sussex (GB)
Inventor : Miller, Rodney
208 Willingdon Road
Eastbourne, BN21 1TU, East Sussex (GB)

(74) Representative : Boutland, John Anthony et al
Barker, Brettell & Boutland Prudential
Buildings 97-101 Above Bar Street
Southampton SO9 4GT (GB)

(54) Improvements in or relating to rotary pumps.

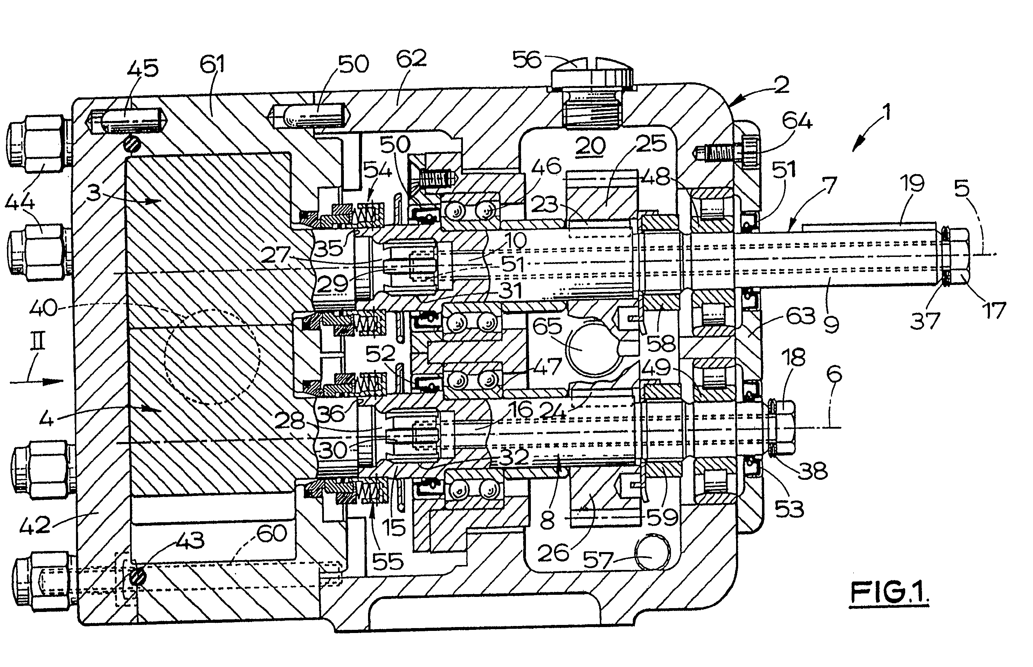

(57)    With reference to Figure 1, a rotary lobe pump 1 for pumping blood plasma comprises a casing 2 and a pair of inter-engaging lobe rotors 3, 4 mounted for contra-rotation within the casing 2 about substantially parallel axes 5, 6.

Substantially parallel shafts 7, 8, of hollow form, also mounted for rotation about the axes 5, 6 are connected to the rotors 3, 4. The hollow shaft 7 locates a tie rod in the form of a draw bolt 10 which extends through the shaft so as to secure it to the rotor 3, and the hollow shaft 8 similarly locates a tie rod in the form of a draw bolt 16 which extends through the shaft so as to secure it to the rotor 4.

The draw bolts 10, 16 are close-fits within their associated shafts 7, 8 so as to prevent radial contact between the casing 2 and the rotors 3, 4. Between the ends of the draw bolts 10, 16, remote from the rotors 3, 4 and clamping/retaining nuts 17, 18, are disposed part-spherical washers 37, 38. Resilience in the clamped washers 37, 38 causes tensile loads to be applied to the draw bolts 10, 16.

The shaft 7 is a drive shaft and is driven by an electric motor (not shown) by way of a drive key 19.

EP 0 444 941 A1

FIG.1.

# IMPROVEMENTS IN OR RELATING TO ROTARY PUMPS

## BACKGROUND OF THE INVENTION

This invention relates to rotary pumps and is particularly, but not exclusively, concerned with rotary lobe pumps.

Other forms of rotary pumps to which the invention is applicable comprise gear, screw, impeller and rotary piston pumps.

## SUMMARIES OF THE INVENTION

According to one aspect of the invention, a rotary pump comprises a casing, a rotor mounted for rotation within the casing by a hollow shaft, and a tie rod extending through the shaft so as to secure the rotor to the shaft.

According to another aspect of the invention, a rotary pump comprises a casing, a pair of inter-engaging rotors mounted for rotation within the casing about substantially parallel axes, and a shaft connected to each rotor, at least one of the shafts being of hollow form with a tie rod extending through said one shaft so as to secure it to the rotor.

As used herein, the term "rotor" includes an internal or external gear, a screw, an impeller, or a rotary piston, or any other form of fluid-displacing rotary pump member.

Rotary pumps according to the invention are particularly suitable for handling food and pharmaceutical materials where the retention of any material which might be forced into a crevice such as a spline, keyway or screw thread, can contaminate subsequent material being pumped.

Pumps according to the invention are also particularly suitable for cleaning-in-place to a high bacteriological standard.

## BRIEF DESCRIPTION OF THE DRAWINGS

An embodiment of the invention will now be described, by way of example only, with reference to the accompanying drawings, wherein:

Figure 1 is a side view, primarily in medial section, of a rotary pump,

Figure 2 is an end view, to a reduced scale, looking in the direction of arrow II of Figure 1, but with the end cover of the pump removed, and

Figure 3 is a fragmentary side view, in section, of a modified pump.

In the drawings, like references refer to like components and features.

## DETAILED DESCRIPTION OF THE PREFERRED EMBODIMENT

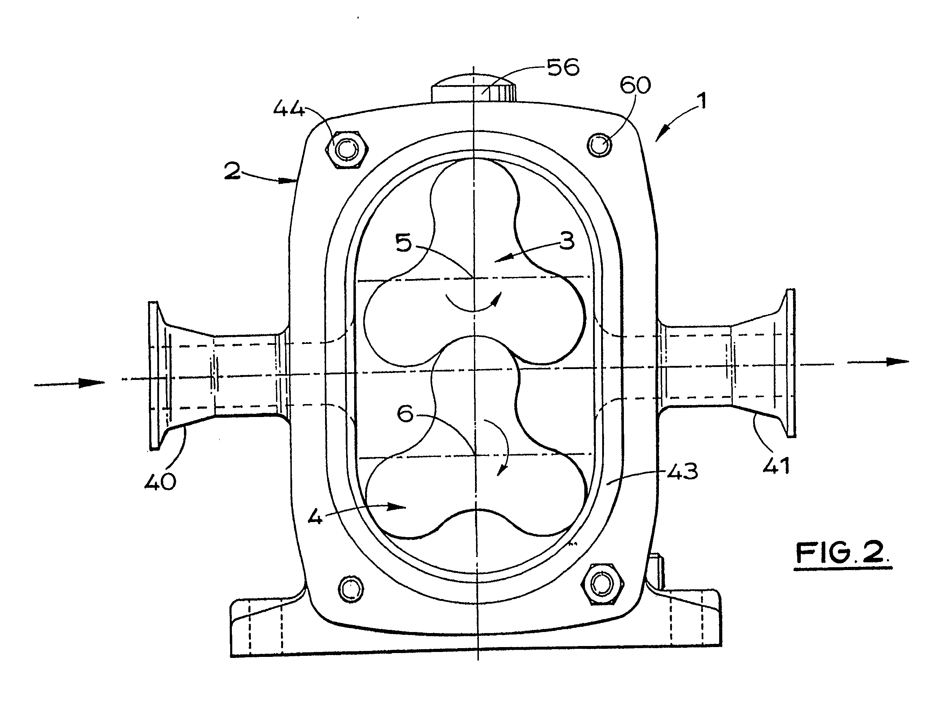

With reference to Figures 1 and 2 of the drawings, a rotary lobe pump 1 for pumping blood plasma comprises a casing 2 and a pair of inter-engaging lobe rotors 3, 4 mounted for contra-rotation within the casing 2 about substantially parallel axes 5, 6.

Substantially parallel shafts 7, 8, of hollow form, also mounted for rotation about the axes 5, 6 are connected to the rotors 3, 4. The hollow shaft 7 locates a tie rod in the form of a draw bolt 10 which extends through the shaft so as to secure it to the rotor 3.

Each rotor and its associated shaft comprises a rotor and shaft assembly.

The hollow shaft 8 locates a tie rod in the form of a draw bolt 16 which extends through the shaft so as to secure it to the rotor 4.

The draw bolts 10, 16 are close-fits within their associated shafts 7, 8 so as to prevent radial contact between the casing 2 and the rotors 3, 4. Between the ends of the draw bolts 10, 16, remote from the rotors 3, 4 and clamping/retaining nuts 17, 18, are disposed part-spherical washers 37, 38. Resilience in the clamped washers 37, 38 causes tensile loads to be applied to the draw bolts 10, 16.

The shaft 7 is a drive shaft and is driven by an electric motor (not shown) by way of a drive key 19. Prime movers other than electric motors may be used.

The casing 2 comprises a rotor-containing portion 61 accurately located to a gear case portion 62 by dowels 50. The gear case portion 62 houses inter-engaging timing gearwheels 25, 26 mounted on the shafts 7 and 8 respectively by keys 23, 24. The gearwheels 25, 26, which are disposed in a gear space 20, are secured in place by locking assemblies 58, 59.

The gearwheels 25, 26 have minimal backlash and transmit rotation from the drive shaft 7 to the driven shaft 8 and in turn to the rotors 3, 4.

Pumping action is induced by the closely inter-engaged rotors 3, 4 without physical contact between the rotors.

The gear case portion 62 of the casing 2 also houses spaced bearings 46, 47 and 48, 49 which locate the hollow shafts 7, 8.

The shaft ends of the lobe rotors 3, 4 are formed with integral stub shaft portions 27, 28 which define external or male splines 29, 30 respectively. The interiors of the shafts 7, 8 are formed with internal or female splines 31, 32 which inter-engage with the splines 29, 30 in a co-operating manner. The draw bolt 10 is formed with a screw-threaded extension 51 which screws into a screwthreaded socket formed in the stub shaft 27 whereby the draw bolt 10 is secured to the stub shaft 27. The draw bolt 16 is similarly secured to the stub shaft 28.

The stub shafts 27, 28 are formed with shoulders or landings 35, 36 and it is against these surfaces that the adjacent ends of the shafts 7, 8 are held tightly by the draw bolts 10, 16, so that, together with seal assemblies 50, 52 and 54, 55, leakage to atmosphere of the material being pumped or ingress of contaminants into the portion 61 is prevented. Seals 54, 55 are rotatable seals.

The rear face of the gear case portion 62 of the casing 2 is formed with two bores through which the hollow shafts 7, 8 extend. Seal assemblies 50, 52 and 51, 53 close off the gear case portion 62 at the front and rear ends thereof so as to inhibit out-leakage of gearbox lubricating oil. The seal assemblies 51, 53 are housed in an end cover 63 provided with a ring of securing bolts 64.

The rotors 3, 4 are a close tolerance fit within the portion 61, so as to substantially minimise pumping chamber upswept volume. All internal corners of the casing portion 61 and its cover 42, that is to say those parts of the pump casing which define the pumping chamber, are formed with radii. The external surfaces of the'rotors 3 and 4 are also formed with radii. The arrangement substantially minimises areas where pumped materials could coagulate and not be reliably removed by cleaning-in-place action. (See below).

Other features of the pump 1 include a pump inlet 40 and a pump outlet 41, which form an integral part of the rotor-containing portion 61. The portion 61 has substantially flat internal surfaces tangential to the rotor 3, 4 bores, which are radiussed so as to blend into the integral inlet 40 and outlet 41, (see Figure 2), so as to facilitate self-draining of the pumped material. Further features of the pump 1 include the pump cover 42, peripheral seal 43, cover-securing nuts 44 and studs 60, and locating spigot 45. In addition, the pump 1 is provided with gearbox filler and drain plugs 56, 57, plus a window 65 for observing gear case oil level in the space 20.

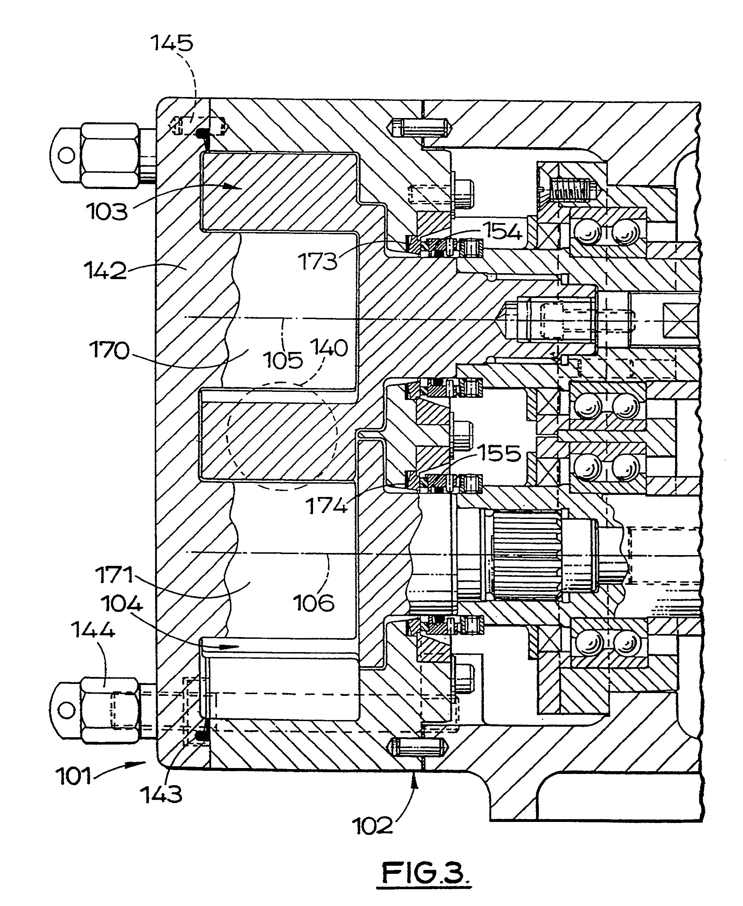

Figure 3 illustrates a modified pump 101 which comprises a rotary piston form of pump.

The pump 101 has co-operating rotary pistons 103, 104 rotatable about stationary spigots 170, 171 which form part of the pump cover 142.

The pump 101 is also provided with a peripheral seal 143 of generally 'L'-shaped or tadpole-like cross-section. The seal 143, which is located within and by the stepped cover 142, is substantially flush with the casing 102, the casing being formed to achieve this and to ensure that seal maximum compression and sealing effect is adjacent the internal bores of the casing portion corresponding to portion 61 and pumped material is prevented from reaching the major cross-section of the seal 143.

Figure 3 also shows that the rotatable seals 154, 155 of the pump 101 are sealed to the casing portion 61 by stationary gaskets 173, 174. Maximum compression is imposed on the gaskets 173, 174 in such a way that pumping material is prevented from reaching the external surfaces of the seals 154, 155.

Components corresponding to the seal 143 and gaskets 173, 174 may be used on the pump 1 of Figure 1 if desired, although some modifications may be necessary.

The invention is applicable to single shaft pumps.

The pump 101 of Figure 3, (as well as the pump 1 of Figure 1 when suitably modified as suggested in the preceding paragraph), is particularly suitable for CIP (Cleaning-in-place) action to a high bacteriological standard. Substantial minimising of areas where pumped material could coagulate, by radiussing, (see above), also assists CIP action.

When CIP action is taken, the pump is flushed through with water and chemicals after pumping has taken place. This ensures that substantially all traces of pumped material are removed, so that subsequent bacteriological growth and contamination are prevented from taking place.

## Claims

1. A rotary pump comprising a casing, a rotor mounted for rotation within the casing by a hollow shaft, and a tie rod extending through the shaft so as to secure the rotor to the shaft.

2. A rotary pump as claimed in claim 1 wherein the shaft end of the rotor is formed with a stub shaft portion defining external splines, and the rotor end of the hollow shaft is formed with co-operating internal splines.

3. A rotary pump as claimed in claim 2 wherein the rotor end of the tie rod engages by screw threads with the stub shaft portion of the rotor.

4. A rotary pump as claimed in claim 1, 2 or 3 wherein the end of the tie rod remote from the rotor engages by screw threads with a retaining nut and a resilient member is disposed between the nut and the adjacent end of the shaft whereby resilience in the resilient member causes a tensile load to be applied to the tie rod.

5. A rotary pump as claimed in claim 4, wherein the resilient member comprises a part-spherical washer.

6. A rotary pump comprising a casing and a pair of rotor and shaft assemblies mounted within the casing, at least one of said assemblies being of the form set forth in any one of claims 1 to 5, the assemblies being mounted for rotation about substantially parallel axes, with the rotors of the assemblies inter-engaging.

7. A rotary pump as claimed in claim 6 wherein the inter-engaging gearwheels are mounted on the shafts of the assemblies, and drive means are provided for rotation of one of the shafts whereby rotation thereof rotates the other of the shafts.

8. A rotary pump comprising a casing, a pair of inter-engaging rotors mounted for rotation within the casing about substantially parallel axes, and a shaft connected to each rotor, at least one of the shafts being of hollow form with a tie rod extending through said one shaft so as to secure it to the rotor.

9. A rotary pump substantially as hereinbefore described with reference to Figures 1 and 2 of the accompanying drawings.

10. A rotary pump substantially as hereinbefore described with reference to Figures 1 and 2 of the accompanying drawings, modified substantially as hereinbefore described with reference to Figure 3 of said drawings.

11. A rotary pump as claimed in any one of Claims 1 to 8, wherein those parts of the pump casing defining the pumping chamber are formed with radii, the chamber is profiled with flat sides, and the chamber is provided with a pumping inlet and a pumping outlet, the bores of said inlet and outlet having radii blended with said casing.

FIG.1

EP 0 444 941 A1

FIG.2.

**FIG.3.**

**European Patent Office**

# EUROPEAN SEARCH REPORT

Application Number

EP 91 30 1678

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| Y | US-A-2642808 (THOMAS)<br>* column 3, lines 36 - 62; figure 4 *<br>* column 4, line 57 - column 5, line 28 * | 1, 6, 7, 8 | F04C15/00<br>F16D1/06 |
| A | | 11 | |
| | --- | | |
| Y | US-A-2730352 (IPSEN)<br>* column 1, line 69 - column 2, line 28; figures * | 1, 2, 6, 7, 8 | |
| A | | 4 | |
| | --- | | |
| Y | US-A-4355917 (BUNGER)<br>* column 3, lines 8 - 41; figures * | 2 | |
| | --- | | |
| A | DE-C-168700 (COMP. PARISIENNE DES VOITURES ELECTRIQUES)<br>* page 1, line 56 - page 2, line 6; figures * | 3, 4 | |
| | ----- | | |

| | |
|---|---|
| | **TECHNICAL FIELDS SEARCHED (Int. Cl.5 )**<br><br>F04C<br>F16D<br>F01C |

The present search report has been drawn up for all claims

| Place of search | Date of completion of the search | Examiner |
|---|---|---|
| THE HAGUE | 31 MAY 1991 | KAPOULAS T. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)